# EUROPEAN PATENT APPLICATION

(11) **EP 4 037 320 A1**
(43) Date of publication of application: **03.08.2022**
(21) Application number: 21154411.9
(22) Date of filing: 29.01.2021
(51) Int. Cl.: H04N 19/55

(54) **BOUNDARY EXTENSION FOR VIDEO CODING**

(71) Applicant: Lemon Inc., Grand Cayman, KY1-1205 (KY)
(72) Inventor: Wien, Mathias, 52074 Aachen (DE); Horst, Nicolas, 52074 Aachen (DE)
(74) Representative: Zimmermann & Partner Patentanwälte mbB

(57) **Abstract**

Embodiments of the present disclosure provide a solution for boundary extension for video coding. In this solution, a boundary extension mode is determined for a current block in a current picture. A boundary of a reference picture is extended according to the determined boundary extension mode to generate an extended reference block for the current block. Inter-picture prediction is performed on the current block based on the extended reference block, to perform a conversion between the current block and an encoded representation of a video. First indication information indicating the boundary extension mode for at least one block including the current block is signaled in the encoded representation. Through this solution, the per-block extension provides high flexibility in boundary extensions and thus allows for unrestricted inter-picture prediction.

## Description

### FIELD

Embodiments of the present disclosure relates generally to video coding techniques, and more particularly, to boundary extension for video coding.

### BACKGROUND

Digital video devices implement video compression techniques, such as those described in the standards defined by MPEG-2, MPEG-4, ITU-T H.263, ITU-T H.264/MPEG-4, Part 10, Advanced Video Coding (AVC), ITU-T H.265 (High Efficiency Video Coding (HEVC)), ITU-T H.266 (Versatile Video Coding (VVC)), and extensions of such standards. The video devices may transmit, receive, encode, decode, and/or store digital video information more efficiently by implementing such video compression techniques.

Video compression techniques may perform spatial (intra-picture) prediction and/or temporal (inter- picture) prediction to reduce or remove redundancy inherent in video sequences. For block-based video coding, a video slice (e.g., a video frame or a portion of a video frame) may be partitioned into blocks, such as coding tree blocks and coding blocks. Spatial or temporal prediction results in a predictive block for a current block to be coded. Residual data represents pixel differences between the original block to be coded and the predictive block. For further compression, the residual data may be transformed from the pixel domain to a transform domain, resulting in residual transform coefficients, which then may be quantized.

### SUMMARY

Embodiments of the present disclosure provide a solution for boundary extension for video coding (encoding and decoding).

In a first aspect, a video coding method is provided. The method comprises: determining a boundary extension mode for a current block in a current picture; extending a boundary of a reference picture according to the determined boundary extension mode to generate an extended reference block for the current block; performing inter-picture prediction on the current block based on the extended reference block, to perform a conversion between the current block and an encoded representation of a video, wherein first indication information indicating the boundary extension mode for at least one block including the current block is signaled in the encoded representation.

In a second aspect, an electronic device is provided. The electronic device comprises a processing unit; and a memory coupled to the processing unit and having instructions stored thereon which, when executed by the processing unit, cause the electronic device to perform the method of the first aspect.

In a third aspect, a computer storage medium is provided. The computer storage medium has machine-executable instructions stored thereon, the machine-executable instructions, when executed by a device, causing the device to perform the method of the first aspect.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### BRIEF DESCRIPTION OF THE DRAWINGS

Through the following detailed description with reference to the accompanying drawings, the above and other objectives, features, and advantages of example embodiments of the present disclosure will become more apparent, wherein:
Fig. 1 illustrates a block diagram that illustrates an example video coding system in which example embodiments of the present disclosure can be implemented;
Fig. 2 illustrates an example of motion compensation in which pixels in a current picture are predicted from a reference picture;
Fig. 3 illustrates a flowchart of a process of video encoding in accordance with some embodiments of the present disclosure;
Fig. 4 illustrates a schematic diagram of an example current picture with per-block boundary extension applied in accordance with some embodiments of the present disclosure;
Fig. 5 illustrates a schematic diagram of an example for boundary extension in accordance with some embodiments of the present disclosure;
Fig. 6 illustrates a flowchart of a process of video decoding in accordance with some embodiments of the present disclosure;
Fig. 7 illustrates tables indicating coding performance improvements achieved by an example embodiment of video coding disclosed herein and a traditional video coding solution;
Fig. 8 is a block diagram that illustrates an example video encoder in accordance with some embodiments of the present disclosure;
Fig. 9 is a block diagram that illustrates an example video decoder in accordance with some aspects of the present disclosure; and
Fig. 10 illustrates a block diagram of a computing device in which various embodiments of the present disclosure can be implemented.

Throughout the drawings, the same or similar reference numerals usually refer to the same or similar elements.

### DETAILED DESCRIPTION

Principle of the present disclosure will now be described with reference to some embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an example embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

### Example Environment

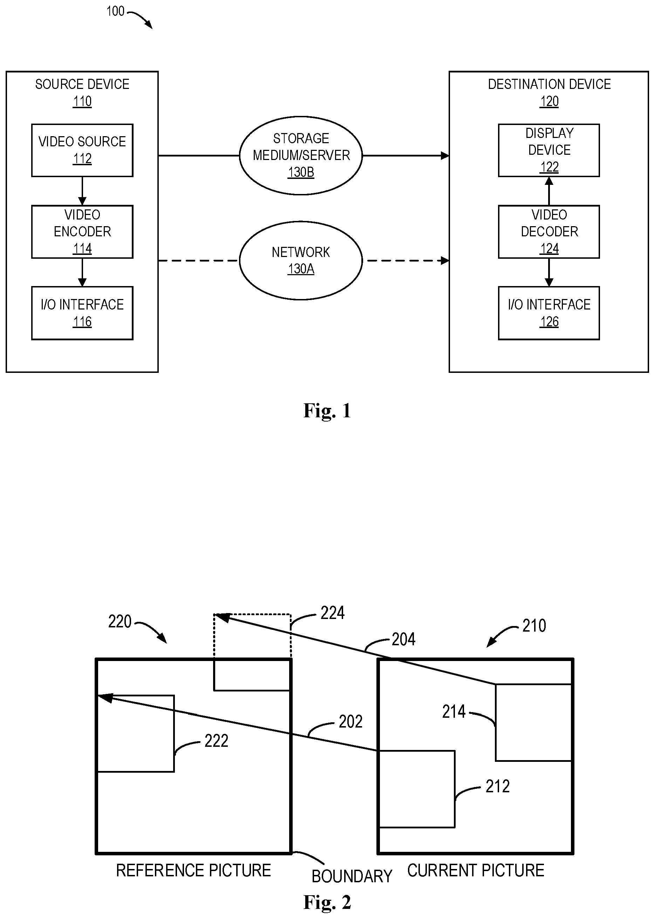

Fig. 1 is a block diagram that illustrates an example video coding system 100 in which example embodiments of the present disclosure can be implemented. As shown, the video coding system 100 includes a source device 110 and a destination device 120. The source device 110 can be also referred to as a video encoding device, and the destination device 120 can be also referred to as a video decoding device. In operation, the source device 110 can be configured to generate encoded video data and the destination device 120 can be configured to decode the encoded video data generated by the source device 110. The source device 110 may include a video source 112, a video encoder 114, and an input/output (I/O) interface 116.

The video source 112 may include a source such as a video capture device. Examples of the video capture device include, but are not limited to, an interface to receive a video from a video content provider, a computer graphics system for generating video data, and/or a combination thereof.

The video may comprise one or more pictures. The video encoder 114 encodes the video from the video source 112 to generate an encoded representation of the video. The encoded representation may include a sequence of bits and thus may also be referred to as a bitstream. For example, the encoded representation of the video may include encoded pictures and associated data. The encoded picture is an encoded representation of a picture. The associated data may include sequence parameter sets, picture parameter sets, and other syntax structures. The I/O interface 116 may include a modulator/demodulator and/or a transmitter. The encoded representation may be transmitted directly to the destination device 120 via the I/O interface 116 through the network 130A. The encoded representation of the video may also be stored onto a storage medium/server 130B for access by the destination device 120.

The destination device 120 may include an I/O interface 126, a video decoder 124, and a display device 122. The I/O interface 126 may include a receiver and/or a modem. The I/O interface 126 may acquire an encoded representation of a video from the source device 110 or the storage medium/server 130b. The video decoder 124 may decode the encoded representation to obtain a decoded video. The display device 122 may display the decoded video to a user. The display device 122 may be integrated with the destination device 120, or may be external to the destination device 120 which be configured to interface with an external display device.

The video encoder 114 and the video decoder 124 may operate according to a video compression standard, such as the High Efficiency Video Coding (HEVC) standard, Versatile Video Coding (VVC) standard and other current and/or further standards.

### Basic Principle

In current video coding schemes, inter-picture prediction (also referred to as "interframe prediction) is applied to predict a current block in a current picture from one or more previously decoded pictures (referred to as "reference pictures"). For instance, in the context of HEVC and other video coding specifications, a video coder (e.g., a video encoder or video decoder) may apply inter-picture prediction to generate a predictive block for the current block. If the video coder applies inter prediction to generate a predictive block, the video coder may generate the predictive block based on decoded samples of one or more reference pictures. The reference pictures are pictures other than the current picture and may be pictures prior to or after the current picture in the video sequence.

A motion vector(s) is used to describe the motion of the current block in the current picture from the reference picture(s). The motion vector may point to a location in a reference picture to indicate a reference block for the current block. For instance, Fig. 2 illustrates an example of motion compensation in which pixels in a current picture 210 are predicted from a reference picture 220. As shown in FIG. 2, a current block 212 in the current picture 210 is inter-coded and has a motion vector 202. The motion vector 202 points to a reference block 222 in the reference picture 220, which is previously-coded. Then, the pixels in the current block 212 are predicted from the pixels in the reference block 222. It is noted that the reference block 222 may be generated by reconstructed samples in one or more reference pictures.

In some cases, a motion vector for a current block may point to a reference block outside of the boundary of the reference picture. In this case, at least a part of the reference block is not available. As further illustrated in the example of Fig. 2, when a current block 214 in the current picture 210 is inter-coded, it is found that the current block 214 has a motion vector 204 which points to a reference block 224 at least partially outside of the boundary of the reference picture 220.

To allow for the motion vector that can point to an area outside of the reference picture, the reference picture needs to be extended beyond its boundary so that a complete reference block can be obtained to predict the current block. For an area outside of a reference picture, there may be a large number of possible extensions. Current video coding methods generally chose one simple padding algorithm to extend the boundary of the reference picture. For example, in some conventional solutions, the reference picture may be extended by continuing the border pixels orthogonal to its boundary or by inter-picture prediction from already-decoded pictures. In another conventional solution, an extension method is derived by analyzing a boundary region within the reference picture.

However, the conventional boundary extensions only suggest extending the reference picture in one fixed way for use in prediction of all the blocks that refer to it. As result, the inter-picture predictions for the blocks are restricted as the video coding cannot adapt the predictions based on the video content that is currently predicted.

According to embodiments of the present disclosure, a solution for adaptive boundary extension for video coding is proposed. This solution allows a per-block extension of a reference picture instead of performing a global extension. A boundary extension mode is determined for a current block in a current picture, which is used in generating an extended reference block for the current block by extending a reference picture. In addition to perform inter-picture prediction on the current block based on the extended reference block, additional information is signaled in an encoded representation of a video to indicate the used boundary extension mode for the current block. As such, the additional information in the encoded representation can be extracted from the encoded representation and the indicated boundary extension mode can be used to predict the extended reference block for the current block at the decoding side.

Through this solution, the per-block extension provides high flexibility in boundary extensions and thus allows for unrestricted inter-picture prediction. It is possible to determine different extension modes of the reference pictures based on the video contents to be predicted. The flexibility in boundary extensions and the un-restriction for inter-picture prediction can further improve prediction quality and coding efficiency.

Several example embodiments of the present disclosure are described in detail below with reference to the figures.

### Example Processes for Video Coding

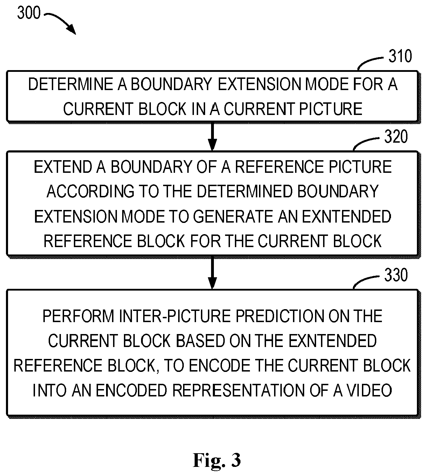

Fig. 3 illustrates a flowchart of a process 300 of video encoding according to some embodiments of the subject matter as described herein. In some embodiments, the process 300 may be implemented by the source device 110, for example, by the video encoder 114 in the source device 110, for encoding a video. The process 300 may also be implemented by any other devices or device clusters similar to the computing device 1000. For purpose of description, the process 300 is described with reference to Fig. 1 from the perspective of the video encoder 114.

At 310, the video encoder 114 determines a boundary extension mode for a current block in a current picture. According to example embodiments of the present disclosure, it is allowed to select the boundary extension mode for an individual block in a picture. The boundary extension mode may be determined as it is found to be beneficial for inter-picture prediction of the current block.

As used herein, a "current picture" refers a picture in a video that is currently coded (i.e., encoded or decoded). One or more pictures may be previously coded before the coding of the current picture. A "current block" refers to a block in the current picture that is currently coded (i.e., encoded or decoded).

In some embodiments, the video encoder 114 may receive a video to be encoded. The video may comprise a plurality of pictures. As used therein, a "picture" may refer to a video frame or a part of a video frame (which may also be called as a "sub-picture"). In video coding based on inter-picture prediction, for any current picture in the video to be coded, one or more reference pictures may be determined, which are those pictures that are previously coded.

In some embodiments, the video encoder 114 may determine whether a motion vector of the current block points to a reference block at least partially outside of a reference picture for the current picture. A motion vector for a current block may be generated to describe a motion of the current block. The motion vector may indicate an area that is outside a picture boundary of the reference picture. In such case, at least a part of the reference block for the current block locates outside the reference picture, whose pixels are unavailable.

In some embodiments, if the motion vector points to a reference block that is totally included in the reference picture, the video encoder 114 may process the current block according to a normal process for inter-picture prediction. In some embodiments, if it is determined that the motion vector points to a reference block at least partially outside of the reference picture, the video encoder 114 may determine to extend the reference picture and thus may need to select a boundary extension mode for the current block.

Various boundary extension modes may be applicable. For example, an example boundary extension mode may require continuing the border pixels orthogonal to the boundary of the reference picture. Some other example boundary extension modes may be determined based on the boundary region within the reference picture, which will be further described in the following. It should be appreciated that any suitable boundary extension mode may be selected for the current block. In some embodiments, there may be a plurality of predetermined boundary extension modes selectable by the video encoder 114 for each block.

In example embodiments of the present disclosure, it is proposed to perform per-block boundary extension. For each block to be encoded in the current picture, a respective boundary extension mode may be determined for extending the boundary of the reference picture. As such, for a plurality of blocks in the current picture, different boundary extension modes may be used, each indicating a different mode for extending the boundary of the reference picture.

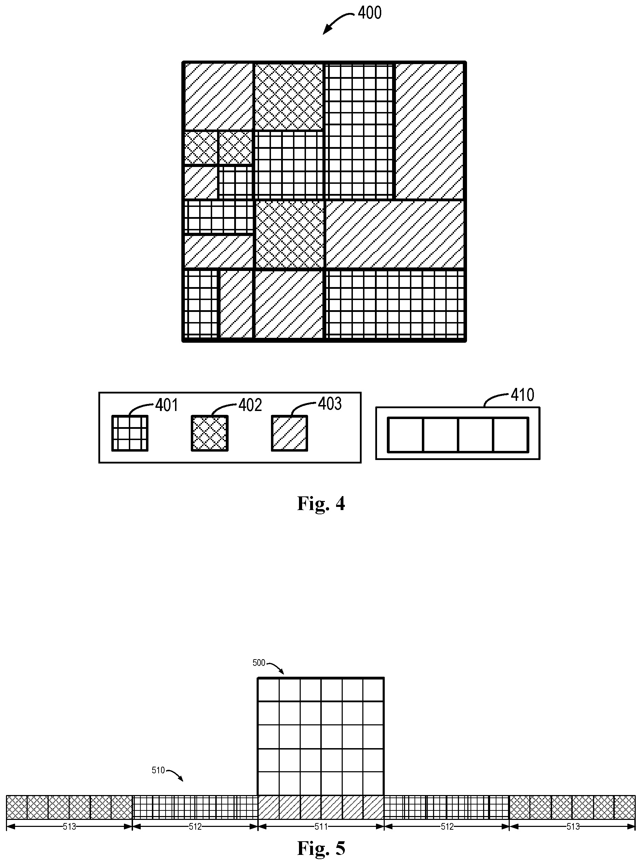

Fig. 4 illustrates a schematic diagram of an example current picture 400 with per-block boundary extension applied in accordance with some embodiments of the present disclosure. In the example of Fig. 4, blocks of the current picture 400 are illustrated with their boundary extension modes marked. As illustrated, three different boundary extension modes 401, 402, and 403 are applied for different blocks in the current picture 400. As compared with a global extension, the per-block extension has the impact that for a fixed prediction mode, a pixel value with a fixed location in the reference picture can vary based on an extension area including that pixel that is extended for a specific block.

With the boundary extension mode determined, at 320, the video encoder 114 extends a boundary of a reference picture according to the determined boundary extension mode to generate an extended reference block for the current block. In some embodiments, when the reference picture is extended according to the boundary extension mode, the extended reference block in the extended reference picture may be selected for the current block based on the motion vector of the current block.

At 330, the video encoder 114 performs inter-picture prediction on the current block based on the extended reference block. Through the inter-picture prediction, a conversion between the current block and an encoded representation of a video including the current block can be performed. At the encoding side, the video encoder 114 encodes the current block into the encoded representation.

With the extended reference block is determined, the inter-picture prediction may be performed accordingly, depending on the specific inter-picture prediction mode used. In some embodiments, in performing the inter-picture prediction, the video encoder 114 may generate a motion-compensated reference block as a predicted block, from the motion vector and the extended reference block, and generate a prediction residual block by subtracting the motion-compensated reference block from the current block in the video data to be encoded. The video encoder 114 may encode the prediction residual block into the encoded representation of the video. The encoded representation of the video may include encoded representations of other blocks of the current picture and other pictures of the video as well as other information required for the decoding of the video.

According to example embodiments of the present disclosure, indication information (sometimes referred to as "first indication information") indicating the boundary extension mode for at least one block (including the current block) of the current picture is signaled in the encoded representation of the video. For example, the video encoder 114 may encode additional signalling into the encoded representation of the video, as the first indication information indicating the boundary extension mode used in the inter-picture prediction performed on the current block.

The first indication information can be used at the decoding side to extend the reference picture for performing the encoding. For example, the encoded representation of the video may be provided from the source device to a destination device, e.g., the destination device 120. The voice decoder 124 in the destination device 120 may decode the current block from the encoded representation.

In some embodiments, in determining the boundary extension mode, a block with a certain characteristic may be excluded from the process of determining specific extension modes and may be processed using a default boundary extension mode. In an example embodiment, if the motion vector of a current block in the current picture points to a reference block at least partially outside of the reference picture, the video encoder 114 may further determine whether the characteristic associated with the current block meets a predetermined characteristic criterion. If the characteristic associated with the current block meets the predetermined characteristic criterion, the video encoder 114 may determine a specific boundary extension mode for the current block, for example, from a plurality of predetermined boundary extension modes. In the case that the characteristic fails to meet the predetermined characteristic criterion, the video encoder 114 may select a default boundary extension mode for the current block. The default boundary extension mode may be a simpler extension mode than those determined for the blocks with their associated characteristic meet the predetermined characteristic criterion.

In some embodiments, the characteristic may comprise a size of an area extended from the reference picture. In some embodiments, the predetermined characteristic criterion indicates that the size of the area extended from the reference picture is below a size threshold. In some embodiments, the predetermined characteristic criterion indicates that the size of the area extended from the reference picture is equal to or below a size threshold. Generally, for a block with a large size, a smooth reference block may be used for the block; while for a block with a small size, a complex reference block may be used. As such, for a current block, if it is determined that a size of an area extended from the reference picture is relatively large (larger than the size threshold or equal to the size threshold), which means that the reference block tends to be smooth and thus a default boundary extension mode can be used.

In some embodiments, the characteristic may additionally or alternatively include an intra-prediction mode used for the current block, quantization parameters (QP) for the current block, motion information indicating whether affine prediction, bi-prediction, or uni-prediction is used for the current block or not, or the like. The video encoder 114 may measure the smoothness of the current block based on those characteristics and compare those characteristics with respective thresholds to determine whether the default boundary extension mode is to be selected. In some embodiments, the video encoder 114 selects the default boundary extension mode if a characteristic associated with the current block indicates that the block is smooth enough (the characteristic meets the predetermined characteristic criterion).

In some embodiments, if a default boundary extension mode is selected for a current block of the current picture, the video encoder 114 may not include any indication information into the encoded representation of the video to indicate the default boundary extension mode. As such, the overhead of storing and communicating the bitstream may be reduced as less additional information needs to be included. At the decoding side, if the video decoder 124 determines that a current block has its motion vector points to an area outside of the reference picture but no indication information is included in the encoded representation, the video decoder 124 may determine that the default boundary extension mode is used for the current block.

In some embodiments, the video encoder 114 may group indication information indicating respective boundary extension mods for a group of blocks in the current picture. Specifically, an indication information set may be signaled in the encoded representation of the video, to indicate a plurality of boundary extension modes for a group of blocks in the current picture, respectively. The first indication information indicating the boundary extension mode for the current block is also included in the indication information set. In some examples, a same boundary extension mode may be determined by the video encoder 114 for two or more blocks in the group of blocks in the current picture. In some examples, the group of blocks may comprise a plurality of blocks in a coding tree unit (CTU) of the current picture. In other examples, the group of blocks may not be restricted to a CTU but may include more or less blocks than those included in the CTU.

In some embodiments, the video encoder 114 may determine the number of different boundary extension modes applicable for use. Depending on the number of boundary extension modes, the video encoder 114 may determine an amount of signalling for the indication information for indicating each individual boundary extension mode. In the example of Fig. 4, it is assumed that a total number of three (3) different boundary extension modes are applicable. As such, 2-bit indication information may be used to identify the three different boundary extension modes. For example, 2-bit indication information of "01" may refer to the boundary extension mode 401, 2-bit indication information of "10" may refer to the boundary extension mode 402, and 2-bit indication information of "11" may refer to the boundary extension mode 403.

In some embodiments, the video encoder 114 may group the indication information indicating boundary extension modes for a group of blocks of the current picture in the encoded representation, and signal further indication information (sometimes referred to as "second indication information") in the encoded representation of the video, to indicate the number of boundary extension modes for the group of blocks. In some examples, the group of blocks may comprise a plurality of blocks in a CTU of the current picture. In other examples, the group of blocks may not be restricted to a CTU but may include more or less blocks than those included in a CTU.

The second indication information may precede a collection of indication information indicating the respective boundary extension modes determined for the group of blocks in the encoded representation of the video. In the example of Fig. 4, it is assumed that an indication information set for a group 410 of four blocks of the current picture 400 is signaled in the in a bitstream representing the encoded representation. If there are a specific number (e.g., one, two, or three) of different boundary extension modes used for boundary extension of the group 410 of blocks, this number (e.g., one, two, or three) may be indicated at a location in a bitstream representing the encoded representation before the locations for the indication information set indicating the respective boundary extension modes. In some examples, the second indication information indicating the number of boundary extension modes for the group of blocks may be encoded after the last prediction unit (PU) of the CTU.

As such, the number of boundary extension modes in the bitstream may be used to improve transmission error resilience. Upon extracting the second indication information indicating the number of boundary extension modes from the encoded representation, the video decoder 124 may verify whether sufficient indication information for the group of blocks can be extracted from the following part of the encoded representation.

In some embodiments, as mentioned above, the boundary extension modes that can be selected for respective blocks in a current picture may be determined based on the boundary region within a reference picture for the current picture. A different boundary extension mode may lead to a different extended reference picture for inter-picture prediction of the current block in the current picture. In some example embodiments, it is proposed to adapt an intra prediction mode as a boundary extension mode. In particular, a boundary extension mode may be determined based on an intra prediction mode and a predefined constraint. In some examples, the intra prediction mode may include one of a plurality of angular intra prediction modes or one of a plurality of matrix-based intra prediction modes. The intra prediction mode may be used to determine a set of potential reference samples for use in predicting an extension area for the reference picture. The predefined constraint may specify the relative positions and number of used reference samples.

In some embodiments, the adapted angular intra prediction modes or matrix-based intra prediction modes used for determining the boundary extension modes may allow selecting reference samples from a boundary region within the reference picture, for example, one or more reference sample lines parallel to the boundary of the reference picture. In some example embodiments, for some intra prediction modes, four reference sample lines parallel to the boundary of the reference picture may be used.

Fig. 5 illustrates a schematic diagram of an example for boundary extension in accordance with some embodiments of the present disclosure. In this example, for a current block in a current picture, a reference sample line 510 parallel to the boundary of the reference picture is determined and reference samples used to predict an extension area 500 for the reference picture. The reference sample line 510 is included in the reference picture (the rest of the reference picture is not shown in Fig. 5). Thus, values of samples in the reference sample line 510 are available. In this disclosure, the terms "sample" and "pixel" may be used interchangeably.

Depending on the angular intra prediction modes or the matrix-based intra prediction mode defined in a boundary extension mode, different sets of reference samples may be selected from the boundary region of the reference picture. In some embodiments, different constraints may be applied for the same set of reference samples according to different boundary extension modes. Each of the constraints may specify the relative positions and number of used reference samples. In the example of Fig. 5, for the reference samples in the reference sample line 510, three constraints may be applied to divide the reference samples into three groups of reference samples 511, 512, and 513, each group of reference samples satisfying one of the three constraints.

In video encoding, after a boundary extension mode is determined for a current block of the current picture, the video encoder 114 may determine a set of reference samples from a boundary region within the reference picture based on an intra prediction mode (e.g., an angular intra prediction mode or a matrix-based intra prediction mode) indicated by the boundary extension mode. In the example of a boundary extension mode is used, the set of reference samples may be determined based on a prediction angle of the example of an boundary extension mode. In the example of a matrix-based intra prediction mode, the set of reference samples may be determined from one or two of the left and top reference sample lines of the reference pictures. The video encoder 114 may extend the boundary of the reference picture based on the set of reference samples.

In some embodiments, the video encoder 114 may further apply the predefined constraint indicated by the boundary extension mode onto the set of reference samples, to determine a plurality of reference samples for use in predicting the extension area. In some examples, among the set of reference samples determined by the intra prediction mode, if one or more reference samples does not meet the predefined constraint (i.e., the relative position or the number of the reference numbers does not meet the constraint), the video encoder 114 may substitute the one or more reference samples with the nearest neighbor of reference samples in the reference picture that meet the constraint. The total number of reference numbers for use may be determined based on the intra prediction mode.

After the reference samples in the reference pictures are determined, the video encoder 114 may determine an extension area outside of the reference picture by performing intra-prediction mode based on the plurality of reference samples for use. For example, in Fig. 5, it is assumed that the reference sample line 510 is selected based on an intra prediction mode and the group of reference samples 512 in the reference sample line 510 meets the predefined constraint, the video encoder 114 may intra-prediction based on the group of reference samples and the intra prediction mode. The process of intra-prediction based on the angular intra prediction mode or the matrix-based intra prediction mode may be similar as the process that is performed within a picture, which is known to those skilled in the art.

In some embodiments, the video encoder 114 may apply a smoothing filter on the reference samples before performing the intra-prediction. Alternatively, the smoothing filtering may be performed in combination with the intra-prediction task. In some examples, a 3-tap binomial filter may be applied to the reference samples. In other examples, other smoothing filter may also applicable. The video encoder 114 may determine the extension area outside of the reference picture based on the filtered reference samples.

After the extension area is obtained, the video encoder 114 may obtain the extended boundary of the reference picture by merging the extension area with the reference picture, to obtain an extended reference picture. The extended reference block for the current block may be determined from the extended reference picture based on the motion vector. Generally, the extension area may be at least partially included in the reference block.

In the above example embodiments, the per-block boundary extension and the video encoding are described. For other blocks in the current picture and other pictures of the video, a similar process may be implemented to generate an encoded representation of the video. The encoded representation may be provided to the destination device (e.g., the video encoder) for decoding and for future use (e.g., storing or display). The process of video decoding is generally reciprocal to the process of video decoding described with respect to the video encoder. In the following, the process of video decoding is described in a relatively brief way.

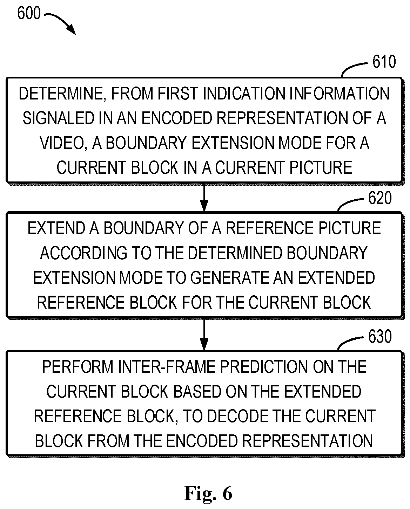

Fig. 6 illustrates a flowchart of a process of video decoding 600 in accordance with some embodiments of the present disclosure. The process 600 may be implemented by the destination device 120, for example, by the video decoder 124 in the destination device 120. The process 600 may also be implemented by any other devices or device clusters similar to the computing device 1000. For purpose of description, the process 600 is described with reference to Fig. 1 from the perspective of the video decoder 124.

At 610, the video decoder 124 determines a boundary extension mode for a current block in a current picture. As discussed above, first indication information indicating the boundary extension mode used for the current block is signaled in the encoded representation of a video including the current block. Accordingly, the video decoder 124 can determine the boundary extension mode used for the current block from the first indication information in the encoded representation.

In some embodiments, the video decoder 124 may directly extract the first indication information from the encoded representation. In some embodiments, the video decoder 124 may determine whether a motion vector of the current block in the current picture points to a reference block at least partially outside of a reference picture. If the motion vector points to the reference block at least partially outside of the reference picture, the video decoder 124 may determine to extract the boundary extension mode from the encoded representation.

At 620, the video decoder 124 extends a boundary of a reference picture according to the determined boundary extension mode to generate an extended reference block for the current block. At 630, the video decoder 124 performs inter-picture prediction on the current block based on the extended reference block. The inter-picture prediction is described above and thus is not repeated here. Through the inter-picture prediction, a conversion between the current block and the encoded representation of the video can be performed. At the decoding side, the video decoder 124 decodes the current block from the encoded representation.

In some embodiments, if the video decoder 124 determines that the motion vector points to the reference block at least partially outside of the reference picture and a determination that no indication information is extracted from the encoded representation for the current block, it may extend a boundary of the reference picture according to a default boundary extension mode to generate the extended reference block for the current block.

In some embodiments, the video decoder 124 may extract, from the encoded representation, second indication information indicating the number of boundary extension modes, the further indication information preceding a collection of indication information indicating respective boundary extension modes determined for a group of blocks (e.g., a CTU) in the encoded representation, the group of blocks comprising the current block. If the collection of indication information extracted from the encoded representation indicates the number of boundary extension modes, the video decoder 124 may determine that the collection of indication information is correct for the group of blocks.

In some embodiments, the boundary extension mode is determined based on an intra prediction mode and a predefined constraint. The video decoder 124 may determine to extend the boundary of the reference picture in a similar process as described above from the process of video encoding, and the details are omitted here for brevity. The extended reference block may then be selected from the extended reference picture based on the motion vector and used in the inter-picture prediction for the current block.

According to the example embodiments of the present disclosure, the per-block extension provides high flexibility in boundary extensions and thus allows for unrestricted inter-picture prediction. The flexibility in boundary extensions and the un-restriction for inter-picture prediction can further improve prediction quality and coding efficiency.

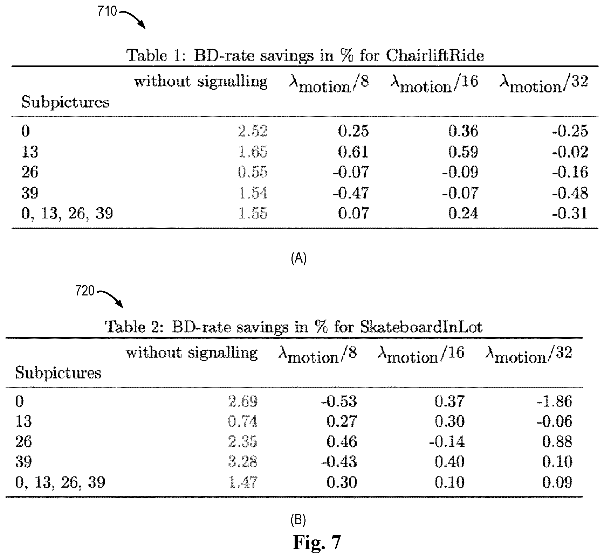

Fig. 7 illustrates tables indicating coding performance improvements achieved by an example embodiment of video coding disclosed herein and a traditional video coding solution. By employing the traditional video coding solution, no indication information for per-block boundary extension modes are signaled from the video encoder to the video decoder and global boundary extension is applied to the reference picture for all the blocks in the current picture. In the shown tables, BD-rate savings are used to measure the performance of the example embodiment of video coding disclosed herein and the traditional video coding solution (marked in the column titled *"without signalling"*). A video sequence "ChairliftRide" is tested to measure the BD-rate savings in Table 1 710, and a video sequence "SkateboardInLot" is tested to measure the BD-rate savings in Table 720. The positive numbers of the BD-rate savings indicate the positive savings. As can be seen, by observing the whole video sequence, the example embodiment of video coding can always achieve positive BD-rate savings.

### Example Video Encoder ad Decoder

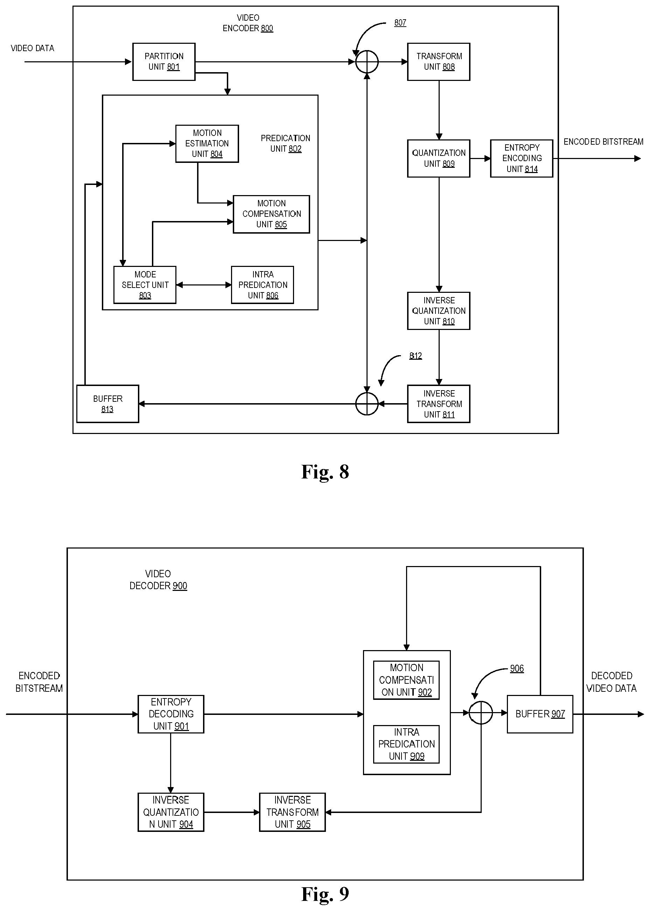

The video encoder and decoder as discussed above may be implemented according to the description with reference to Figs. 8-9 below.

Fig. 8 is a block diagram illustrating an example of video encoder 800, which may be an example of the video encoder 7114 in the system 100 illustrated in Fig. 1, in accordance with some embodiments of the present disclosure.

The video encoder 800 may be configured to implement any or all of the techniques of this disclosure. In the example of Fig. 8, the video encoder 800 includes a plurality of functional components. The techniques described in this disclosure may be shared among the various components of the video encoder 800. In some examples, a processor may be configured to perform any or all of the techniques described in this disclosure.

In some embodiments, the video encoder 800 may include a partition unit 801, a predication unit 802 which may include a mode select unit 803, a motion estimation unit 804, a motion compensation unit 805 and an intra-prediction unit 806, a residual generation unit 807, a transform unit 808, a quantization unit 809, an inverse quantization unit 810, an inverse transform unit 811, a reconstruction unit 812, a buffer 813, and an entropy encoding unit 814.

In other examples, the video encoder 800 may include more, fewer, or different functional components. In an example, the predication unit 802 may include an intra block copy (IBC) unit. The IBC unit may perform predication in an IBC mode in which at least one reference picture is a picture where the current video block is located.

Furthermore, although some components, such as the motion estimation unit 804 and the motion compensation unit 805, may be integrated, but are represented in the example of Fig. 8 separately for purposes of explanation.

The partition unit 801 may partition a picture into one or more video blocks. The video encoder 800 and the video decoder may support various video block sizes.

The mode select unit 803 may select one of the coding modes, intra or inter, e.g., based on error results, and provide the resulting intra-coded or inter-coded block to a residual generation unit 807 to generate residual block data and to a reconstruction unit 812 to reconstruct the encoded block for use as a reference picture. In some embodiments, the mode select unit 803 may select a combination of intra and inter predication (CIIP) mode in which the predication is based on an inter predication signal and an intra predication signal. The mode select unit 803 may also select a resolution for a motion vector (e.g., a sub-pixel or integer pixel precision) for the block in the case of inter-predication.

To perform inter prediction on a current video block, the motion estimation unit 804 may generate motion information for the current video block by comparing one or more reference pictures from buffer 813 to the current video block. The motion compensation unit 805 may determine a predicted video block for the current video block based on the motion information and decoded samples of pictures from the buffer 813 other than the picture associated with the current video block.

The motion estimation unit 804 and the motion compensation unit 805 may perform different operations for a current video block, for example, depending on whether the current video block is in an I-slice, a P-slice, or a B-slice. As used herein, an "I-slice" may refer to a portion of a picture composed of macroblocks, all of which are based upon macroblocks within the same picture. Further, as used herein, in some aspects, "P-slices" and "B-slices" may refer to portions of a picture composed of macroblocks that are not dependent on macroblocks in the same picture.

In some embodiments, the motion estimation unit 804 may perform uni-directional prediction for the current video block, and the motion estimation unit 804 may search reference pictures of list 0 or list 1 for a reference video block for the current video block. The motion estimation unit 804 may then generate a reference index that indicates the reference picture in list 0 or list 1 that contains the reference video block and a motion vector that indicates a spatial displacement between the current video block and the reference video block. The motion estimation unit 804 may output the reference index, a prediction direction indicator, and the motion vector as the motion information of the current video block. The motion compensation unit 805 may generate the predicted video block of the current block based on the reference video block indicated by the motion information of the current video block.

Alternatively, in other embodiments, the motion estimation unit 804 may perform bidirectional prediction for the current video block. The motion estimation unit 804 may search the reference pictures in list 0 for a reference video block for the current video block and may also search the reference pictures in list 1 for another reference video block for the current video block. The motion estimation unit 804 may then generate reference indexes that indicate the reference pictures in list 0 and list 1 containing the reference video blocks and motion vectors that indicate spatial displacements between the reference video blocks and the current video block. The motion estimation unit 804 may output the reference indexes and the motion vectors of the current video block as the motion information of the current video block. The motion compensation unit 805 may generate the predicted video block of the current video block based on the reference video blocks indicated by the motion information of the current video block.

In some examples, the motion estimation unit 804 may output a full set of motion information for decoding processing of a decoder. Alternatively, in some embodiments, The motion estimation unit 804 may signal the motion information of the current video block with reference to the motion information of another video block. For example, the motion estimation unit 804 may determine that the motion information of the current video block is significantly similar to the motion information of a neighboring video block.

In one example, the motion estimation unit 804 may indicate, in a syntax structure associated with the current video block, a value indicating to the video decoder that the current video block has the same motion information as the another video block.

In another example, the motion estimation unit 804 may identify, in a syntax structure associated with the current video block, another video block and a motion vector difference (MVD). The motion vector difference indicates a difference between the motion vector of the current video block and the motion vector of the indicated video block. The video decoder 124 may use the motion vector of the indicated video block and the motion vector difference to determine the motion vector of the current video block.

As discussed above, the video encoder 800 may predictively signal the motion vector. Two examples of predictive signalling techniques that may be implemented by video encoder 800 include advanced motion vector predication (AMVP) and merge mode signalling.

The intra prediction unit 806 may perform intra prediction on the current video block. When the intra prediction unit 806 performs intra prediction on the current video block, the intra prediction unit 806 may generate prediction data for the current video block based on decoded samples of other video blocks in the same picture. The prediction data for the current video block may include a predicted video block and various syntax elements.

The residual generation unit 807 may generate residual data for the current video block by subtracting (e.g., indicated by the minus sign) the predicted video block (s) of the current video block from the current video block. The residual data of the current video block may include residual video blocks that correspond to different sample components of the samples in the current video block.

In other examples, there may be no residual data for the current video block for the current video block, for example in a skip mode, and the residual generation unit 807 may not perform the subtracting operation.

The transform processing unit 808 may generate one or more transform coefficient video blocks for the current video block by applying one or more transforms to a residual video block associated with the current video block.

After the transform processing unit 808 generates a transform coefficient video block associated with the current video block, the quantization unit 809 may quantize the transform coefficient video block associated with the current video block based on one or more quantization parameter (QP) values associated with the current video block.

The inverse quantization unit 810 and the inverse transform unit 811 may apply inverse quantization and inverse transforms to the transform coefficient video block, respectively, to reconstruct a residual video block from the transform coefficient video block. The reconstruction unit 812 may add the reconstructed residual video block to corresponding samples from one or more predicted video blocks generated by the predication unit 802 to produce a reconstructed video block associated with the current block for storage in the buffer 813.

After the reconstruction unit 812 reconstructs the video block, loop filtering operation may be performed reduce video blocking artifacts in the video block.

The entropy encoding unit 814 may receive data from other functional components of the video encoder 800. When entropy encoding unit 814 receives the data, entropy encoding unit 814 may perform one or more entropy encoding operations to generate entropy encoded data and output a bitstream that includes the entropy encoded data.

Fig. 9 is a block diagram illustrating an example of video decoder 900, which may be an example of the video decoder 124 in the system 100 illustrated in Fig. 1, in accordance with some aspects of the present disclosure.

The video decoder 900 may be configured to perform any or all of the techniques of this disclosure. In the example of Fig. 9, the video decoder 900 includes a plurality of functional components. The techniques described in this disclosure may be shared among the various components of the video decoder 900. In some examples, a processor may be configured to perform any or all of the techniques described in this disclosure.

In the example of Fig. 9, the video decoder 900 includes an entropy decoding unit 901, a motion compensation unit 902, an intra prediction unit 909, an inverse quantization unit 904, an inverse transformation unit 905, and a reconstruction unit 906 and a buffer 907. The video decoder 900 may, in some examples, perform a decoding pass generally reciprocal to the encoding pass described with respect to the video encoder 800 (as shown in Fig. 8).

The entropy decoding unit 901 may retrieve an encoded representation of a video (e.g., an encoded bitstream). The encoded representation may include entropy coded video data (e.g., encoded blocks of video data). The Entropy decoding unit 901 may decode the entropy coded video data, and from the entropy decoded video data, the motion compensation unit 902 may determine motion information including motion vectors, motion vector precision, reference picture list indexes, and other motion information. The motion compensation unit 902 may, for example, determine such information by performing the advanced motion vector prediction (AMVP) and merge mode. AMVP is used, including derivation of several most probable candidates based on data from adjacent PBs and the reference picture. Motion information typically includes the horizontal and vertical motion vector displacement values, one or two reference picture indices, and, in the case of prediction regions in B slices, an identification of which reference picture list is associated with each index. As used herein, in some embodiments, a "merge mode" may refer to deriving the motion information from spatially or temporally neighboring blocks.

The motion compensation unit 902 may produce motion compensated blocks. Identifiers for interpolation filters to be used with sub-pixel precision may be included in the syntax elements.

The motion compensation unit 902 may use the interpolation filters as used by the video encoder 800 during encoding of the video block to calculate interpolated values for sub-integer pixels of a reference block. The motion compensation unit 902 may determine the interpolation filters used by the video encoder 800 according to the received syntax information and use the interpolation filters to produce predictive blocks.

The motion compensation unit 902 may use at least part of the syntax information to determine sizes of blocks used to encode frame (s) and/or slice (s) of the encoded video sequence, partition information that describes how each macroblock of a picture of the encoded video sequence is partitioned, modes indicating how each partition is encoded, one or more reference pictures (and reference picture lists) for each inter-encoded block, and other information to decode the encoded video sequence. As used herein, in some aspects, a "slice" may refer to a data structure that can be decoded independently from other slices of the same picture, in terms of entropy coding, signal prediction, and residual signal reconstruction. A slice can either be an entire picture or a region of a picture.

The intra prediction unit 903 may use intra prediction modes for example received in the bitstream to form a prediction block from spatially adjacent blocks. The inverse quantization unit 903 inverse quantizes, i.e., de-quantizes, the quantized video block coefficients provided in the bitstream and decoded by entropy decoding unit 901. Inverse transform unit 903 applies an inverse transform.

The reconstruction unit 906 may obtain the decoded blocks, e.g., by sum the residual blocks with the corresponding prediction blocks generated by motion compensation unit 802 or intra-prediction unit 903. If desired, a deblocking filter may also be applied to filter the decoded blocks in order to remove blockiness artifacts. The decoded video blocks are then stored in buffer 907, which provides reference blocks for subsequent motion compensation/intra predication and also produces decoded video for presentation on a display device.

### Example Device

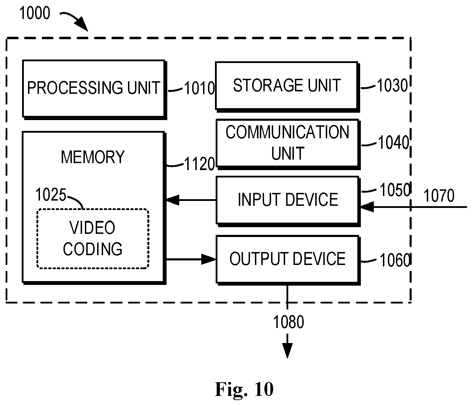

Fig. 10 illustrates a block diagram of a computing device 1000 in which various embodiments of the present disclosure can be implemented. The computing device 1000 may be implemented as or included in the source device 110 (or the video encoder 114) or the destination device 120 (or the video decoder 124).

It would be appreciated that the computing device 1000 shown in Fig. 10 is merely for purpose of illustration, without suggesting any limitation to the functions and scopes of the embodiments of the present disclosure in any manner.

As shown in Fig. 10, the computing device 1000 includes a general-purpose computing device 1000. The computing device 1000 may at least comprise one or more processors or processing units 1010, a memory 1020, a storage device 1030, one or more communication units 1040, one or more input devices 1050, and one or more output devices 1060.

In some embodiments, the computing device 1000 may be implemented as any user terminal or server terminal having the computing capability. The server terminal may be a server, a large-scale computing device or the like that is provided by a service provider. The user terminal may for example be any type of mobile terminal, fixed terminal, or portable terminal, including a mobile phone, station, unit, device, multimedia computer, multimedia tablet, Internet node, communicator, desktop computer, laptop computer, notebook computer, netbook computer, tablet computer, personal communication system (PCS) device, personal navigation device, personal digital assistant (PDA), audio/video player, digital camera/video camera, positioning device, television receiver, radio broadcast receiver, E-book device, gaming device, or any combination thereof, including the accessories and peripherals of these devices, or any combination thereof. It would be contemplated that the computing device 1000 can support any type of interface to a user (such as "wearable" circuitry and the like).

The processing unit 1010 may be a physical or virtual processor and can implement various processes based on programs stored in the memory 1020. In a multi-processor system, multiple processing units execute computer executable instructions in parallel so as to improve the parallel processing capability of the computing device 1000. The processing unit 1010 may also be referred to as a central processing unit (CPU), a microprocessor, a controller or a microcontroller.

The computing device 1000 typically includes various computer storage medium. Such medium can be any medium accessible by the computing device 1000, including, but not limited to, volatile and non-volatile medium, or detachable and non-detachable medium. The memory 1020 can be a volatile memory (for example, a register, cache, Random Access Memory (RAM)), a non-volatile memory (such as a Read-Only Memory (ROM), Electrically Erasable Programmable Read-Only Memory (EEPROM), or a flash memory), or any combination thereof. The storage device 1030 may be any detachable or non-detachable medium and may include a machine-readable medium such as a memory, flash memory drive, magnetic disk or another other media, which can be used for storing information and/or data and can be accessed in the computing device 1000.

The computing device 1000 may further include additional detachable/non-detachable, volatile/non-volatile memory medium. Although not shown in Fig. 10, it is possible to provide a magnetic disk drive for reading from and/or writing into a detachable and non-volatile magnetic disk and an optical disk drive for reading from and/or writing into a detachable non-volatile optical disk. In such cases, each drive may be connected to a bus (not shown) via one or more data medium interfaces.

The communication unit 1040 communicates with a further computing device via the communication medium. In addition, the functions of the components in the computing device 1000 can be implemented by a single computing cluster or multiple computing machines that can communicate via communication connections. Therefore, the computing device 1000 can operate in a networked environment using a logical connection with one or more other servers, networked personal computers (PCs) or further general network nodes.

The input device 1050 may be one or more of a variety of input devices, such as a mouse, keyboard, tracking ball, voice-input device, and the like. The output device 1060 may be one or more of a variety of output devices, such as a display, loudspeaker, printer, and the like. By means of the communication unit 1040, the computing device 1000 can further communicate with one or more external devices (not shown) such as the storage devices and display device, with one or more devices enabling the user to interact with the computing device 1000, or any devices (such as a network card, a modem and the like) enabling the computing device 1000 to communicate with one or more other computing devices, if required. Such communication can be performed via input/output (I/O) interfaces (not shown).

In some embodiments, instead of being integrated in a single device, some or all components of the computing device 1000 may also be arranged in cloud computing architecture. In the cloud computing architecture, the components may be provided remotely and work together to implement the functionalities described in the present disclosure. In some embodiments, cloud computing provides computing, software, data access and storage service, which will not require end users to be aware of the physical locations or configurations of the systems or hardware providing these services. In various embodiments, the cloud computing provides the services via a wide area network (such as Internet) using suitable protocols. For example, a cloud computing provider provides applications over the wide area network, which can be accessed through a web browser or any other computing components. The software or components of the cloud computing architecture and corresponding data may be stored on a server at a remote position. The computing resources in the cloud computing environment may be merged or distributed at locations in a remote data center. Cloud computing infrastructures may provide the services through a shared data center, though they behave as a single access point for the users. Therefore, the cloud computing architectures may be used to provide the components and functionalities described herein from a service provider at a remote location. Alternatively, they may be provided from a conventional server or installed directly or otherwise on a client device.

The computing device 1000 may be used to implement video encoding/decoding in embodiments of the present disclosure. The memory 1020 may include one or more video coding modules 125 having one or more program instructions. These modules are accessible and executable by the processing unit 1010 to perform the functionalities of the various embodiments described herein.

In the example embodiments of performing video encoding, the input device 1050 may receive a video as an input 1070 to be encoded. The video may be processed, for example, by the video coding module 1025, to generate an encoded representation of the input video. The encoded representation may be provided via the output device 1060 as an output 1080.

In the example embodiments of performing video decoding, the input device 1050 may receive an encoded representation of a video as the input 1070. The encoded representation may be processed, for example, by the video coding module 1025, to generate decoded video data. The decoded video data may be provided via the output device 1060 as the output 1080.

### Example Implementations

Some example embodiments of the present disclosure are listed below.

In a first aspect, the present disclosure provides a video coding method. The method comprises: determining a boundary extension mode for a current block in a current picture; extending a boundary of a reference picture according to the determined boundary extension mode to generate an extended reference block for the current block; and performing inter-picture prediction on the current block based on the extended reference block, to perform a conversion between the current block and an encoded representation of a video, wherein first indication information indicating the boundary extension mode for at least one block including the current block is signaled in the encoded representation.

In some embodiments, the conversion comprises: encoding the current block into the encoded representation.

In some embodiments, the conversion comprises: decoding the current block from the encoded representation.

In some embodiments, determining the boundary extension mode comprises: determining whether a motion vector of the current block points to a reference block at least partially outside of a reference picture; and in accordance with a determination that the motion vector points to the reference block at least partially outside of the reference picture, determining the boundary extension mode for the current block.

In some embodiments, wherein determining the boundary extension mode for the current block comprises: determining whether a characteristic associated with the current block meets a predetermined characteristic criterion; and in accordance with a determination that the characteristic associated with the current block meets the predetermined characteristic criterion, determining the boundary extension mode for the current block from a plurality of predetermined boundary extension modes.

In some embodiments, the method further comprises: in accordance with a determination that the characteristic associated with the current block fails to meet the predetermined characteristic criterion, selecting a default boundary extension mode for the current block; and performing inter-picture prediction on the current block by extending the reference picture according to the default boundary extension mode, to perform a conversion between the current block and the encoded representation, without indication information indicating the default extension mode signaled in the encoded representation.

In some embodiments, the characteristic associated with the current block comprises a size of an area extended from the reference picture. In some embodiments, the predetermined characteristic criterion indicates that the size of the area extended from the reference picture below a size threshold. In some embodiments, the predetermined characteristic criterion indicates that the size of the area extended from the reference picture is equal to or below a size threshold.

In some embodiments, an indication information set comprising the first indication information is signaled in the encoded representation, and wherein the indication information set indicates a plurality of boundary extension modes for a group of blocks in the current picture, respectively, the group of blocks comprising the at least one block.

In some embodiments, second indication information is signaled in the encoded representation and precedes the indication information set, the second indication information indicating the number of boundary extension modes in the plurality of extension modes. In some embodiments, the group of blocks comprises a plurality of blocks in a coding tree unit (CTU) of the current picture.

In some embodiments, the boundary extension mode is determined based on an intra prediction mode of at least one reference sample of the extended reference block and a predefined constraint. In some embodiments, extending the boundary of the reference picture comprises: determining a set of reference samples from a boundary region within the reference picture based on the intra prediction mode; and extending the boundary of the reference picture based on the set of reference samples.

In some embodiments, extending the boundary of the reference picture based on the set of reference samples comprises: determining a plurality of reference samples for use based on the predefined constraint and the set of reference samples; determining an extension area outside of the reference picture by performing intra-prediction based on the plurality of reference samples; and extending the boundary of the reference picture by merging the extension area with the reference picture.

In some embodiments, the boundary region of the reference picture comprises one or more reference sample lines parallel to the boundary of the reference picture.

In some embodiments, the intra prediction mode comprises an angular intra prediction mode or a matrix-based intra prediction mode.

In some embodiments, determining the extension area outside of the reference picture further comprises: applying a smoothing filter on the plurality of reference samples, to obtained a plurality of filtered reference samples; and determining the extension area based on the plurality of filtered reference samples.

In a second aspect, the present disclosure provides an electronic device. The electronic device comprises a processing unit; and a memory coupled to the processing unit and having instructions stored thereon which, when executed by the processing unit, cause the electronic device to perform the method of the first aspect.

In a third aspect, the present disclosure provides a computer program product tangibly stored on a computer storage medium and comprising machine-executable instructions which, when executed by a device, cause the device to perform the method of the first aspect. The computer storage medium may comprise a non-transitory computer storage medium.

In a fourth aspect, the present disclosure provides a computer storage medium having machine-executable instructions stored thereon, the machine-executable instructions, when executed by a device, causing the device to perform the method of the first aspect. In some embodiments, the computer storage medium may comprise a non-transitory computer storage medium.

The functionalities described herein can be performed, at least in part, by one or more hardware logic components. For example, and without limitation, illustrative types of hardware logic components that can be used include Field-Programmable Gate Arrays (FPGAs), Application-specific Integrated Circuits (ASICs), Application-specific Standard Products (ASSPs), System-on-a-chip systems (SOCs), Complex Programmable Logic Devices (CPLDs), and the like.

Program code for carrying out the methods of the present disclosure may be written in any combination of one or more programming languages. The program code may be provided to a processor or controller of a general-purpose computer, special purpose computer, or other programmable data processing apparatus such that the program code, when executed by the processor or controller, causes the functions/operations specified in the flowcharts and/or block diagrams to be implemented. The program code may be executed entirely or partly on a machine, executed as a stand-alone software package partly on the machine, partly on a remote machine, or entirely on the remote machine or server.

In the context of this disclosure, a machine-readable medium may be any tangible medium that may contain or store a program for use by or in connection with an instruction execution system, apparatus, or device. The machine-readable medium may be a machine-readable signal medium or a machine-readable storage medium. A machine-readable medium may include but not limited to an electronic, magnetic, optical, electromagnetic, infrared, or semiconductor system, apparatus, or device, or any suitable combination of the foregoing. More specific examples of the machine-readable storage medium would include an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations are performed in the particular order shown or in sequential order, or that all illustrated operations are performed to achieve the desired results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single implementation. Rather, various features described in a single implementation may also be implemented in multiple embodiments separately or in any suitable sub-combination.

Although the subject matter has been described in language specific to structural features and/or methodological acts, it is to be understood that the subject matter specified in the appended claims is not necessarily limited to the specific features or acts described above. Rather, the specific features and acts described above are disclosed as example forms of implementing the claims.

## Claims

1. A video coding method comprising:
determining a boundary extension mode for a current block in a current picture;
extending a boundary of a reference picture according to the determined boundary extension mode to generate an extended reference block for the current block; and
performing inter-picture prediction on the current block based on the extended reference block, to perform a conversion between the current block and an encoded representation of a video,
wherein first indication information indicating the boundary extension mode for at least one block including the current block is signaled in the encoded representation.

2. The method of claim 1, wherein the conversion comprises: encoding the current block into the encoded representation.

3. The method of claim 1, wherein the conversion comprises: decoding the current block from the encoded representation.

4. The method of any of claims 1 to 3, wherein determining the boundary extension mode comprises:
determining whether a motion vector of the current block points to a reference block at least partially outside of a reference picture; and
in accordance with a determination that the motion vector points to the reference block at least partially outside of the reference picture, determining the boundary extension mode for the current block.

5. The method of claim 2, wherein determining the boundary extension mode for the current block comprises:
determining whether a characteristic associated with the current block meets a predetermined characteristic criterion; and
in accordance with a determination that the characteristic associated with the current block meets the predetermined characteristic criterion, determining the boundary extension mode for the current block from a plurality of predetermined boundary extension modes.

6. The method of claim 5, further comprising:
in accordance with a determination that the characteristic associated with the current block fails to meet the predetermined characteristic criterion, selecting a default boundary extension mode for the current block; and
performing inter-picture prediction on the current block by extending the reference picture according to the default boundary extension mode, to perform a conversion between the current block and the encoded representation, without indication information indicating the default extension mode signaled in the encoded representation.

7. The method of claim 5 or 6, wherein the characteristic associated with the current block comprises a size of an area extended from the reference picture, or
optionally, wherein the predetermined characteristic criterion indicates that the size of the area extended from the reference picture below a size threshold, or
optionally, wherein the predetermined characteristic criterion indicates that the size of the area extended from the reference picture is equal to or below a size threshold.

8. The method of any of claims 1 to 7, wherein an indication information set comprising the first indication information is signaled in the encoded representation, and wherein the indication information set indicates a plurality of boundary extension modes for a group of blocks in the current picture, respectively, the group of blocks comprising the at least one block.

9. The method of claim 8, wherein second indication information is signaled in the encoded representation and precedes the indication information set, the second indication information indicating the number of boundary extension modes in the plurality of extension modes, or
optionally, wherein the group of blocks comprises a plurality of blocks in a coding tree unit (CTU) of the current picture.

10. The method of any of claims 1 to 9, wherein the boundary extension mode is determined based on an intra prediction mode of at least one reference sample of the extended reference block and a predefined constraint, and extending the boundary of the reference picture comprises:
determining a set of reference samples from a boundary region within the reference picture based on the intra prediction mode; and
extending the boundary of the reference picture based on the set of reference samples.

11. The method of claim 10, wherein extending the boundary of the reference picture based on the set of reference samples comprises:
determining a plurality of reference samples for use based on the predefined constraint and the set of reference samples;
determining an extension area outside of the reference picture by performing intra-prediction based on the plurality of reference samples; and
extending the boundary of the reference picture by merging the extension area with the reference picture.

12. The method of claim 10 or 11 wherein the boundary region of the reference picture comprises one or more reference sample lines parallel to the boundary of the reference picture, or
optionally, wherein the intra prediction mode comprises an angular intra prediction mode or a matrix-based intra prediction mode.

13. The method of claim 11 or 12, wherein determining the extension area outside of the reference picture comprises:
applying a smoothing filter on the plurality of reference samples, to obtained a plurality of filtered reference samples; and
determining the extension area based on the plurality of filtered reference samples.

14. An electronic device, comprising:
a processing unit; and
a memory coupled to the processing unit and having instructions stored thereon which, when executed by the processing unit, cause the electronic device to perform the method according to any of claims 1 to 13.

15. A computer storage medium having machine-executable instructions stored thereon, the machine-executable instructions, when executed by a device, causing the device to perform the method according to any of claims 1 to 13.

## Amended claims

### Amended claims in accordance with Rule 137(2) EPC.

1. A video coding method (300, 600) comprising:
determining (310, 610) a boundary extension mode for a current block in a current picture from a plurality of predetermined boundary extension modes and a default boundary extension mode;
extending (320, 620) a boundary of a reference picture according to the determined boundary extension mode to generate an extended reference block for the current block; and
performing (330, 630) inter-picture prediction on the current block based on the extended reference block, to perform a conversion between the current block and an encoded representation of a video,
wherein if the boundary extension mode is determined as one of the plurality of predetermined boundary extension modes, first indication information indicating the boundary extension mode for at least one block including the current block is signaled in the encoded representation, and if the boundary extension mode is determined as the default boundary extension mode, no indication information indicating the default extension mode is signaled in the encoded representation.

2. The method (300) of claim 1, wherein the conversion comprises: encoding the current block into the encoded representation.

3. The method (600) of claim 1, wherein the conversion comprises: decoding the current block from the encoded representation.

4. The method (300, 600) of any of claims 1 to 3, wherein determining the boundary extension mode comprises:
determining whether a motion vector of the current block points to a reference block at least partially outside of a reference picture; and
in accordance with a determination that the motion vector points to the reference block at least partially outside of the reference picture, determining the boundary extension mode for the current block.

5. The method (300) of claim 2, wherein determining the boundary extension mode for the current block comprises:
determining whether a characteristic associated with the current block meets a predetermined characteristic criterion; and
in accordance with a determination that the characteristic associated with the current block meets the predetermined characteristic criterion, determining the boundary extension mode for the current block from the plurality of predetermined boundary extension modes.

6. The method (300) of claim 5, wherein determining the boundary extension mode for the current block further comprises:
in accordance with a determination that the characteristic associated with the current block fails to meet the predetermined characteristic criterion, determining the default boundary extension mode for the current block

7. The method (300) of claim 5 or 6, wherein the characteristic associated with the current block comprises a size of an area extended from the reference picture, or
optionally, wherein the predetermined characteristic criterion indicates that the size of the area extended from the reference picture below a size threshold, or
optionally, wherein the predetermined characteristic criterion indicates that the size of the area extended from the reference picture is equal to or below a size threshold.

8. The method (300, 600) of any of claims 1 to 7, wherein an indication information set comprising the first indication information is signaled in the encoded representation, and wherein the indication information set indicates a plurality of boundary extension modes for a group of blocks in the current picture, respectively, the group of blocks comprising the at least one block.

9. The method (300, 600) of claim 8, wherein second indication information is signaled in the encoded representation and precedes the indication information set, the second indication information indicating the number of boundary extension modes in the plurality of extension modes, or
optionally, wherein the group of blocks comprises a plurality of blocks in a coding tree unit (CTU) of the current picture.

10. The method (300, 600) of any of claims 1 to 9, wherein the boundary extension mode is determined based on an intra prediction mode of at least one reference sample of the extended reference block and a predefined constraint, and extending the boundary of the reference picture comprises:
determining a set of reference samples from a boundary region within the reference picture based on the intra prediction mode; and
extending the boundary of the reference picture based on the set of reference samples.

11. The method (300, 600) of claim 10, wherein extending the boundary of the reference picture based on the set of reference samples comprises:
determining a plurality of reference samples for use based on the predefined constraint and the set of reference samples;
determining an extension area outside of the reference picture by performing intra-prediction based on the plurality of reference samples; and
extending the boundary of the reference picture by merging the extension area with the reference picture.

12. The method (300, 600) of claim 10 or 11 wherein the boundary region of the reference picture comprises one or more reference sample lines parallel to the boundary of the reference picture, or
optionally, wherein the intra prediction mode comprises an angular intra prediction mode or a matrix-based intra prediction mode.

13. The method (300, 600) of claim 11 or 12, wherein determining the extension area outside of the reference picture comprises:
applying a smoothing filter on the plurality of reference samples, to obtained a plurality of filtered reference samples; and
determining the extension area based on the plurality of filtered reference samples.

14. An electronic device (1000), comprising:
a processing unit (1010); and
a memory (1020) coupled to the processing unit (1010) and having instructions stored thereon which, when executed by the processing unit (1010), cause the electronic device (1000) to perform the method (300, 600) according to any of claims 1 to 13.

15. A computer storage medium having machine-executable instructions stored thereon, the machine-executable instructions, when executed by a device (1000), causing the device (1000) to perform the method (300, 600) according to any of claims 1 to 13.
